# EUROPEAN PATENT APPLICATION

(11) **EP 1 715 455 A1**
(43) Date of publication of application: **25.10.2006**
(21) Application number: 06111806.3
(22) Date of filing: 28.03.2006
(51) Int. Cl.: G06T 7/00

(54) **Method and system for transforming 2D image domain data into a 3D dense range map**

(30) Priority: 19.04.2005 US 907877
(71) Applicant: HONEYWELL INC., Morristown, New Jersey 07962 (US)
(72) Inventor: Ma, Yunqian, Roseville, MN 55113 (US); Bazakos, Michael E., Bloomington, MN 55438 (US)
(74) Representative: Haley, Stephen

(57) **Abstract**

A method for transforming two-dimensional image data into a 3D dense range map may include the steps of acquiring at least one image frame from an image sensor, selecting at least one region of interest within the image frame, determining the geo-location of three or more reference points within each selected region of interest, and transforming 2D image domain data from each selected region of interest into a 3D dense range map containing physical features of one or more objects within the image frame. An illustrative video surveillance system includes an image sensor acquiring images from at least one region of interest, a graphical user interface displaying images and a processor determining the geo-location of one ore more objects and transforming two-dimensional image data into a 3D range map containing physical features of said objects.

## Description

The present invention relates generally to the field of video image processing and context based scene understanding and behavior analysis. More specifically, the present invention pertains to systems and methods for transforming two-dimensional image domain data into a 3D dense range map.

Video surveillance systems are used in a variety of applications to detect and monitor objects within an environment. In security applications, for example, such systems are sometimes employed to detect and track individuals or vehicles entering or leaving a building facility or security gate, or to monitor individuals within a store, office building, hospital, or other such setting where the health and/or safety of the occupants may be of concern. In the aviation industry, for example, such systems have been used to detect the presence of individuals at key locations within an airport such as at a security gate or parking garage.

Automation of digital image processing sufficient to perform scene understanding (SU) and/or behavioral analysis of video images is typically accomplished by comparing images acquired from one or more video cameras and then comparing those images with a previously stored reference model that represents a particular region of interest. In certain applications, for example, scene images from multiple video cameras are obtained and then compared against a previously stored CAD site model or map containing the pixel coordinates for the region of interest. Using the previously stored site model or map, events such as motion detection, motion tracking, and/or object classification/scene understanding can be performed on any new objects that may have moved in any particular region and/or across multiple regions using background subtraction or other known techniques. In some techniques, a stereo triangulation technique employing multiple image sensors can be used to compute the location of an object within the region of interest.

One problem endemic in many video image-processing systems is that of correlating the pixels in each image frame with that of real world coordinates. Errors in pixel correspondence can often result from one or more of the video cameras becoming uncalibrated due to undesired movement, which often complicates the automation process used to perform functions such as motion detection, motion tracking, and object classification. Such errors in pixel correlation can also affect further reasoning about the dynamics of the scene such as the object's behavior and its interrelatedness with other objects. The movement of stationary objects within the scene as well as changes in the lighting across multiple image frames can also affect system performance in certain cases.

### Summary

The present invention pertains to systems and methods for transforming two-dimensional image domain data into a 3D dense range map. An illustrative method in accordance with an exemplary embodiment of the present invention may include the steps of acquiring at least one image frame from an image sensor, selecting via manual and/or algorithm-assisted segmentation the key physical background regions of the image, determining the geo-location of three or more reference points within each selected region of interest, and transforming 2D image domain data from each selected region of interest into a 3D dense range map containing physical features of one or more objects within the image frame. A manual segmentation process can be performed to define a number of polygonal zones within the image frame, each polygonal zone representing a corresponding region of interest. The polygonal zones may be defined, for example, by selecting a number of reference points on the image frame using a graphical user interface. A software tool can be utilized to assist the user to hand-segment and label (e.g. "road", "parking lot", "building", etc.) the selected physical regions of the image frame.

The graphical user interface can be configured to prompt the user to establish a 3D coordinate system to determine the geo-location of pixels within the image frame. In certain embodiments, for example, the graphical user interface may prompt the user to enter values representing the distances between the image sensor to a first and second reference point used in defining a polygonal zone, and then measure the distance between those reference points. Alternatively, and in other embodiments, the graphical user interface can be configured to prompt the user to enter values representing the distance to first and second reference points of a planar triangle defined by the polygonal zone, and then measure the included angle between the lines forming the two distances.

Once the values for the reference points used in defining the polygonal zone have been entered, an algorithm or routine can be configured to calculate the 3D coordinates for the reference points originally represented by coordinate pair in 2D. Subsequently, the 2D image domain data inputted within the polygonal zone is transformed into a 3D dense range map using an interpolation technique, which converts 2D image domain data (*i*.*e*. pixels) into a 3D look-up table so that each pixel within the image frame corresponds to real-world coordinates defined by a 3D coordinate system. After that, the same procedure can be applied to another polygonal zone defined by the user, if desired. Using the pixel features obtained from the image frame as well as parameters stored within the 3D look-up table, the physical features of one or more objects located within a region of interest may then be calculated and outputted to a user and/or other algorithms. In some embodiments, the physical features may be expressed as a physical feature vector containing those features associated with each object as well as features relating to other objects and/or static background within the image frame. If desired, the algorithm or routine can be configured to dynamically update the 3D look-up table with new or modified information for each successive image frame acquired and/or for each new region of interest defined by the user.

An illustrative video surveillance system in accordance with an exemplary embodiment of the present invention may include an image sensor adapted to acquire images containing at least one region of interest, display means for displaying images from the image sensor within an image frame, and processing means for determining the geo-location of one or more objects within the image frame. The processing means may comprise a microprocessor/CPU or other suitable processor adapted to run an algorithm or routine that transforms two-dimensional image data received from the image sensor into a 3D dense range map containing physical features of one or more objects located within the image frame.
In the Drawings:

Figure 1 is a diagrammatic view showing an illustrative video surveillance system in accordance with an exemplary embodiment of the present invention;

Figure 2 is a flow chart showing an illustrative algorithm or routine for transforming two-dimensional image domain data into a 3D dense range map;

Figure 3 is a diagrammatic view showing an illustrative step of establishing a 3D camera coordinate system;

Figure 4 is a diagrammatic view showing an illustrative step of determining the geo-location of an object within a polygonal zone;

Figure 5 is a diagrammatic view showing an illustrative step of transforming two-dimensional image domain data into a 3D look-up table;

Figure 6 is a pictorial view showing an illustrative graphical user interface for use in transforming two-dimensional image domain data into a 3D dense range map;

Figure 7 is a pictorial view showing an illustrative step of defining a number of reference points of a polygonal zone using the graphical user interface of Figure 6;

Figure 8 is a pictorial view showing the graphical user interface of Figure 6 once a polygonal zone has been selected within the image frame;

Figure 9 is a pictorial view showing an illustrative step of inputting values for those reference points selected using the graphical user interface of Figure 6; and

Figure 10 is a pictorial view showing the graphical user interface of Figure 6 prompting the user to save a file containing the 3D look-up table data.

The following description should be read with reference to the drawings, in which like elements in different drawings are numbered in like fashion. The drawings, which are not necessarily to scale, depict selected embodiments and are not intended to limit the scope of the invention. Although examples of various programming and operational steps are illustrated in the various views, those skilled in the art will recognize that many of the examples provided have suitable alternatives that can be utilized.

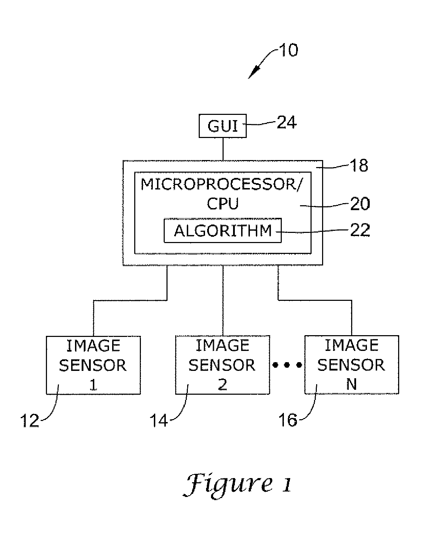

Figure 1 is a diagrammatic view showing an illustrative video surveillance system 10 in accordance with an exemplary embodiment of the present invention. As shown in Figure 1, the surveillance system 10 may include a number of image sensors 12,14,16 each of which can be networked together via a computer 18 to detect the occurrence of a particular event within the environment. In certain embodiments, for example, each of the image sensors 12,14,16 can be positioned at various locations of a building or structure and tasked to acquire video images that can be used to monitor individuals and/or other objects located within a room, hallway, elevator, parking garage, or other such space. The type of image sensor 12,14,16 employed (e.g. static camera, pan-tilt-zoom (PTZ) camera, moving camera, infrared (IR), etc.) may vary depending on the installation location and/or the type of objects to be tracked. While the term "video" is used herein with respect to specific devices and/or examples, such term should be interpreted broadly to include any images generated by an image sensor. Examples of other image spectrums contemplated may include, but are not limited to, near infrared (NIR), Midwave Infrared (MIR), Longwave Infrared (LIR), and/or passive or active Milli-Meter Wave (MMW).

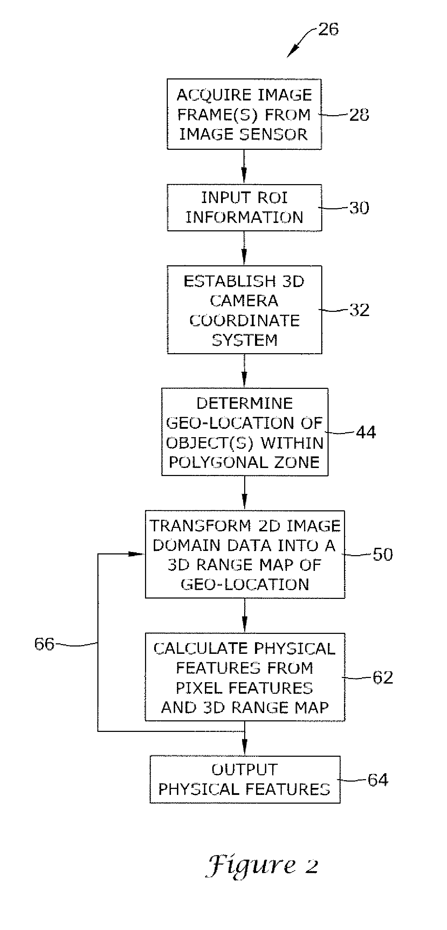

The computer 18 can include software and/or hardware adapted to process real-time images received from one or more of the image sensors 12,14,16 to detect the occurrence of a particular event. In certain embodiments, and as further described below with respect to Figure 2, the microprocessor/CPU 20 can be configured to run an algorithm or routine 22 that acquires images from one of the image sensors 12,14,16, and then transforms such images into a 3D dense range map containing various background and object parameters relating to a region of interest (ROI) selected by a user via a graphical user-interface (GUI) 24. The 3D dense range map may comprise, for example, a 3D look-up table containing the coordinates of a particular scene (*i*.*e*. ROI) as well as various physical features (e.g. location, speed, trajectory, orientation, object type, etc.) relating to objects located within that scene. Using the 3D look-up table, the computer 18 can then run various low-level and/or high-level processing algorithms or routines for detecting the occurrence of events within the scene using behavior classification, object classification, intent analysis, or other such technique. In certain embodiments, for example, the computer 18 can be configured to run a behavioral analysis engine similar to that described with respect to U.S. Application Serial No. 10/938,244, entitled "Unsupervised Learning Of Events In A Video Sequence", which is incorporated herein by reference in its entirety. In some embodiments, the computer 18 can include an event library or database of programmed events, which can be dynamically updated by the user to task the video surveillance system 10 in a particular manner.

Figure 2 is a flow chart showing an illustrative algorithm or routine for transforming two-dimensional image domain data into a 3D dense range map using the illustrative video surveillance system 10 of Figure 1. The algorithm or routine, depicted generally by reference number 26 in Figure 2, may begin at block 28 with the acquisition of one or more image frames within a field of view using one or more of the image sensors 12,14,16 in Figure 1. In certain applications, for example, block 28 may represent the acquisition of real-time images from a single digital video camera installed at a security gate, building entranceway, parking lot, or other location where it is desired to track individuals, automobiles, or other objects moving within the entire or part of the FOV of the image sensor.

Once one or more image frames have been acquired by an image sensor 12,14,16, the user may next input various parameters relating to at least one region of interest to be monitored by the surveillance system 10, as indicated generally by block 30. The selection of one or more regions of interest, where the 3D range information is desired, can be accomplished using a manual segmentation process on the image frame, wherein the computer 18 prompts the user to manually select a number of points using the graphical user interface 24 to define a closed polygon structure that outlines the particular region of interest. In certain techniques, for example, the computer 18 may prompt the user to select at least three separate reference points on the graphical user interface 24 to define a particular region of interest such as a road, parking lot, building, security gate, tree line, sky, or other desired geo-location. The context information for each region of interest selected can then be represented on the graphical user interface 24 as a closed polygonal line, a closed curved line, or a combination of the two. The polygonal lines and/or curves may be used to demarcate the outer boundaries of a planar or non-planar region of interest, forming a polygonal zone wherein all of the pixels within the zone represent a single context class (e.g. "road", "building", "parking lot", etc.). Typically, at least three reference points are required to define a polygonal zone, although a greater number of points may be used for selecting more complex regions on the graphical user interface 24, if desired.

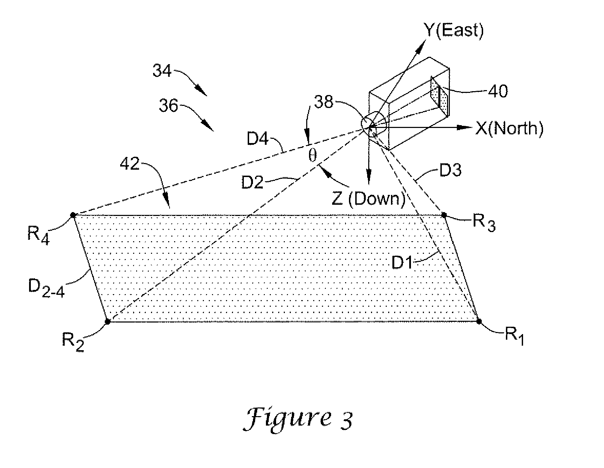

Once the user has performed manual segmentation and defined a polygonal zone graphically representing the region of interest, the algorithm or routine 26 may next prompt the user to setup a 3D camera coordinate system that can be utilized to determine the distance of the image sensor from each reference point selected on the graphical user interface 24, as indicated generally by block 32. An illustrative step 32 showing the establishment of a 3D camera coordinate system may be understood by reference to Figure 3, which shows a 3D camera coordinate system 34 for a planar polygonal zone 36 defined by four reference points R₁, R₂, R₃, and R₄. As shown in Figure 3, a reference point or origin 38 of (X,Y,Z) = (0,0,0) can be assigned to the image sensor 40, with each axis (X,Y,Z) corresponding to various camera axes. In another embodiment, a world coordinate system wherein the origin is located somewhere else such as at the image sensor position ((X,Y,Z) = x₁,y₁,z₁) may also be used.

To measure the distance D₁, D₂, D₃, and D₄ from the image sensor 40 to each of the four reference points R₁, R₂, R₃, and R₄, the user may first measure the distance from one of the reference points to the image sensor 40 using a laser range finder or other suitable instrument, measure the distance from that reference point to another reference point, and then measure the distance from that reference point back to the image sensor 40. The process may then be repeated for every pair of reference points.

In one illustrative embodiment, such process may include the steps of measuring the distance D₂ between the image sensor 40 and reference point R₂, measuring distance D_{2→4} between reference point R₂ and another reference point such as R₄, and then measuring the distance D₄ between that reference point R₄ back to the origin 38 of the image sensor 40. Using the measured distances D₂, D₄, and D_{2→4}, a triangle 42 can then be displayed on the graphical user interface 24 along with the pixel coordinates of each reference point R₂, R₄ forming that triangle 42. A similar process can then be performed to determine the pixel coordinates of the other reference points R₁ and R₃, R₁ and R₂, R₄ and R₃, producing three additional triangles that, in conjunction with triangle 42, form a polyhedron having a vertex located at the origin 38 and a base representing the planar polygonal zone 36.

In an alternative technique, the distance to two points and their included angle from the camera can be measured. The angle can be determined using a protractor or other suitable instrument for measuring the angle θ between the two reference points R₂ and R₄ from the camera instead of determining the distance D_{2→4} between those two points. This situation arises, for example, when one of the reference points is not easily accessible. A laser range finder or other suitable instrument can be utilized to measure the distances D₂ and D₄ between each of the reference points R₂ and R₄ and the origin 38. A similar process can then be performed to determine the pixel coordinates of the other reference points R₁ and R₃, R₁ and R₂, and R₄ and R₃.

In some cases where the camera is installed very high or is otherwise inaccessible, where one of the reference points (e.g. R₂) on the ground is inaccessible, and where the other reference point (e.g. R₄) is accessible, a protractor or other suitable instrument located at R₄ can then be used to measure the angle θ between the reference point R₂ and the origin 38 at R₄. A laser range finder or other suitable instrument can then be utilized to measure the distances D_{2→4} and D₄.

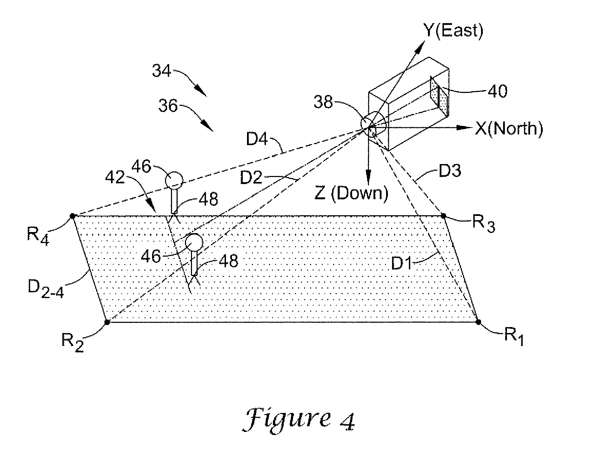

Once a 3D camera coordinate system has been established, the algorithm or routine 26 may next determine the geo-location of one or more objects within the polygonal zone 36, as indicated generally by block 44 in Figure 2. An illustrative step 44 of determining the geo-location of an object within a polygonal zone may be understood by reference to Figure 4, which shows an individual 46 moving from time "t" to time "t+1" within the polygonal zone 36 of Figure 3. As the individual 46 moves from one location to another over time, movement of the individual 46 may be tracked by corresponding the pixel coordinates of the polygonal zone 36 with that of the detected individual 46, using the image sensor 40 as the vertex. A contact point 48 such as the individual's feet may be utilized as a reference point to facilitate transformation of pixel features to physical features during later analysis stages. It should be understood, however, that other contact points may be selected, depending on object(s) to be detected as well as other factors. If, for example, the object to be monitored is an automobile, then a contact point such as a tire or wheel may be utilized, if desired.

Once the geo-location of each object within the polygonal zone 36 has been determined at step 44, the algorithm or routine 26 next transforms the 2D image domain data represented in pixels into a 3D dense range map of the geo-location, as indicated generally by block 50 in Figure 2. An interpolation technique may be employed to convert the 2D image domain data into a 3D look-up table so that each pixel within the image frame corresponds to the defined 3D camera coordinate system. In certain embodiments, for example, the 3D look-up table may include X, Y, and Z parameters representing the coordinates of the geo-location, a region name parameter identifying the name of the ROI containing the coordinates, and a region type parameter describing the type of ROI (e.g. road, parking lot, building, etc.) defined. Other information such as lighting conditions, time/date, image sensor type, etc. may also be provided as parameters in the 3D look-up table, if desired.

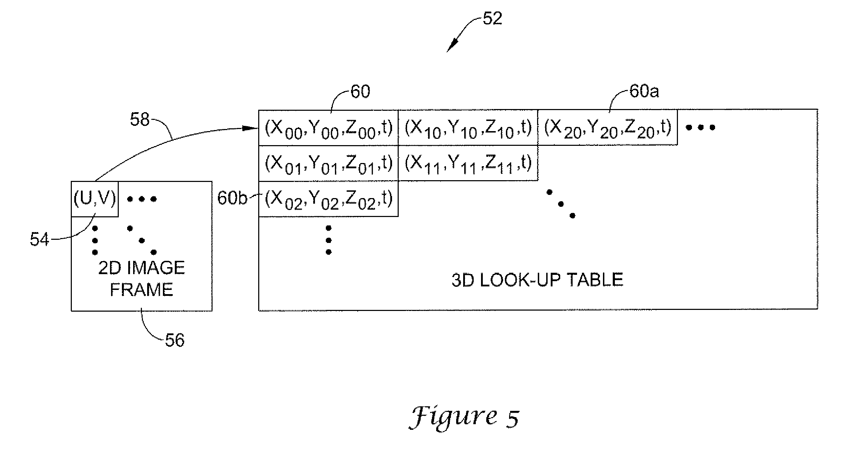

An illustrative step 50 of transforming 2D image domain data into a 3D look-up table 52 may be understood by reference to Figure 5. As shown in Figure 5, each image pixel 54 within a 2D image frame 56 can be mapped into the 3D look-up table 52 by correlating the pixel's 54 coordinates (u,v) with the 3D camera coordinates established at step 32 of Figure 2. As each pixel coordinate (u,v) is matched with the corresponding 3D camera coordinate, as indicated generally by arrow 58, it may be assigned a separate parameter block 60 of (X,Y,Z) within the 3D look-up table 52, with the "X", "Y", and "Z" parameters of each parameter block 60 representing the coordinates of the geo-location for that pixel. In certain embodiments, and as shown in Figure 5, each of the parameter blocks 60 may also include a "t" parameter representing the type of ROI within the scene. If, for example, the coordinates of the parameter block 60 correspond to an ROI such as a parking lot, then the "t" parameter of that block 60 may contain text or code (e.g. "parking lot", "code 1", etc.) signifying that the ROI is a parking lot. In some embodiments, other ROI parameters such as size, global location (*e*.*g*. GPS coordinates), distance and location relative to other ROI's, etc. may also be provided as parameters within the 3D look-up table 52.

The 3D look-up table 52 may include parameter blocks 60 from multiple ROI's located within an image frame 56. In certain embodiments, for example, the 3D look-up table 52 may include a first number of parameter blocks 60a representing a first ROI in the image frame 56 (e.g. a parking lot), and a second number of parameter blocks 60b representing a second ROI in the image frame 56 (*e*.*g*. a building entranceway). In certain embodiments, the 3D look-up table 52 can include parameter blocks 60 for multiple image frames 56 acquired either from a single image sensor, or from multiple image sensors. If, for example, the surveillance system comprises a multi-sensor surveillance system similar that described above with respect to Figure 1, then the 3D look-up table 52 may include parameter blocks 60 for each image sensor used in defining an ROI.

Using the pixel features obtained from the image frame 56 as well as the parameter blocks 60 stored within the 3D look-up table 52, the physical features of one or more objects located within an ROI may then be calculated and outputted to the user and/or other algorithms, as indicated generally by blocks 62 and 64 in Figure 2. In certain applications, for example, it may be desirable to calculate the speed of an object moving within an ROI or across multiple ROI's. By tracking the pixel speed (*e*.*g*. 3 pixels/second) corresponding to the object in the image frame 56 and then correlating that speed with the parameters contained in the 3D look-up table 52, an accurate measure of the object's speed (e.g. 5 miles/hour) can be obtained. Other information such as the range from the image sensor to any other object and/or location within an ROI can also be determined.

The physical features may be expressed as a feature vector containing those features associated with the tracked object as well as features relating to other objects and/or static background within the image frame 56. In certain embodiments, for example, the feature vector may include information regarding the object's velocity, trajectory, starting position, ending position, path length, path distance, aspect ratio, orientation, height, and/or width. Other information such as the classification of the object (*e*.*g*. "individual", "vehicle", "animal", "inanimate", "animate", etc.) may also be provided. The physical features can be outputted as raw data in the 3D look-up table 52, as graphical representations of the object via the graphical user interface 24, or as a combination of both, as desired.

In certain embodiments, and as further indicated by line 66 in Figure 2, the algorithm or routine 26 can be configured to dynamically update the 3D look-up table with new or modified information for each successive image frame acquired, and/or for each new ROI defined by the user. If, for example, the surveillance system detects that objects within an image sequence consistently move in an upward direction within a particular pixel region of an ROI, indicating the presence of a slope, stairs, escalator or other such feature, then the algorithm or routine 26 can be configured to add such information to the 3D look-up table 52. By dynamically updating the 3D look-up table in this manner, the robustness of the surveillance system in tracking objects within more complex ROI's can be improved, particularly in those applications where scene understanding and/or behavior analysis is to be performed.

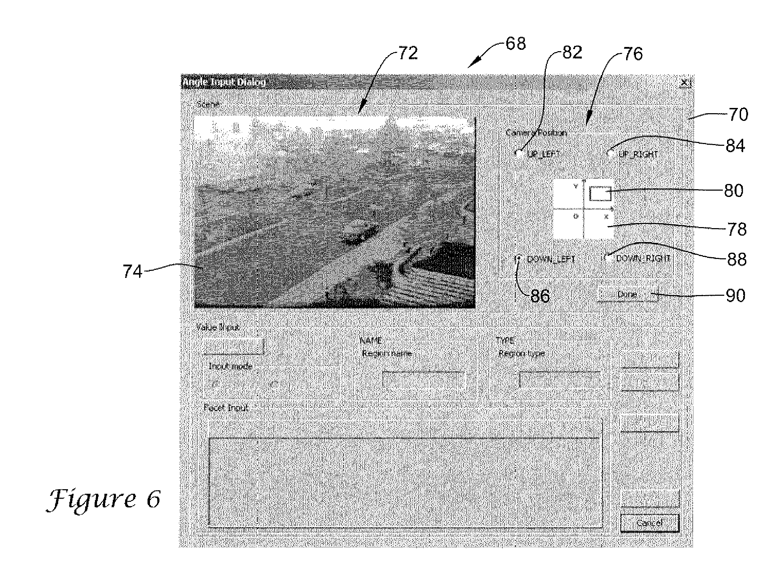

Turning now to Figures 6-11, a method of transforming two-dimensional image domain data into a 3D dense range map will now be described in the context of an illustrative graphical user interface 68. As shown in a first pictorial view in Figure 6, the graphical user interface 68 may include a display screen 70 adapted to display information relating to the image sensor, any defined ROI's, any object(s) located within an ROI, as well as other components of the surveillance system. In the illustrative view depicted in Figure 6, for example, the graphical user interface 68 may include a SCENE section 72 containing real-time image frames 74 obtained from an image sensor, and a CAMERA POSITION section 76 showing the current position of the image sensor used in providing those image frames 74 displayed on the SCENE section 72.

The CAMERA POSITION section 76 of the graphical user interface 68 can be configured to display a frame 78 showing the 3D camera coordinate system to be applied to the image sensor as well as a status box 80 indicating the current position of the image sensor within the coordinate system. In the illustrative view of Figure 6, for example, the status box 80 is located in the upper-right hand corner of the frame 78, indicating that the image sensor is currently positioned in the first quadrant of the coordinate system. A number of selection buttons 82,84,86,88 located at the corners of the frame 78 can be utilized to adjust the current positioning of the image sensor. If, for example the user desires to move the sensor position down and to the left, the user may select the appropriate selection button 86 on the display screen 70, causing the image sensor to change position from its current position (*i*.*e*. the first quadrant) to the selected location (*i*.*e*. the fourth quadrant). In certain embodiments, the graphical user interface 68 can be configured to default to a particular quadrant such as "Down_Left", if desired.

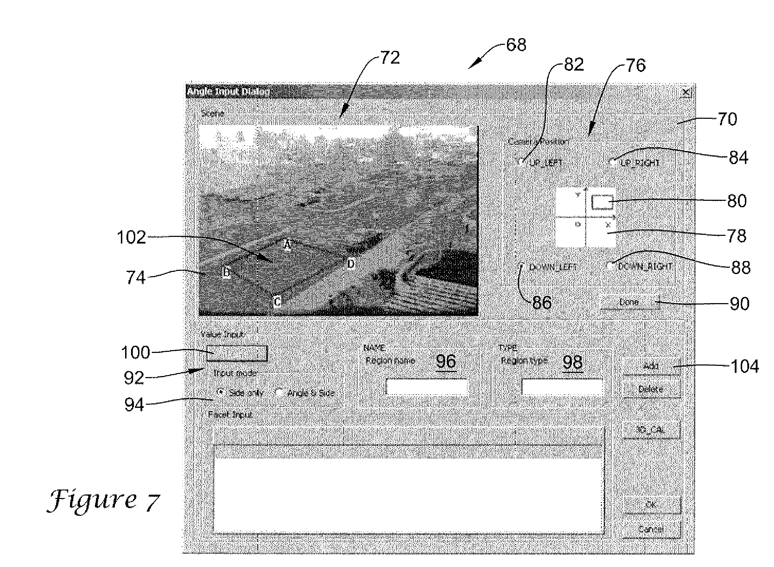

Once the positioning of the image sensor has been selected via the CAMERA POSITIONING section 76, the user may select a "Done" button 90, causing the surveillance system to accept the selected position. Once button 90 has been selected, the graphical user interface 68 can be configured to prompt the user to enter various parameter values into a VALUE INPUT section 92 of the display screen 70, as shown in a second view in Figure 7. As shown in Figure 7, the VALUE INPUT section 92 may include an INPUT MODE selection box 94 that permits the user to toggle between inputting values using either sides only or a combination of sides and angles, a REGION NAME text box 96 for assigning a name to a particular ROI, and a REGION TYPE text box 98 for entering the type of ROI to be defined.

To define an ROI on the image frame 74, the user may select a "Point" button 100 on the VALUE INPUT section 92, and then select at least four reference points on the image frame 74 to define the outer boundaries of the ROI. In the illustrative view of Figure 7, for example, reference points "A", "B", "C", and "D" are shown selected on the image frame 74, defining a polygonal zone 102 having reference points A, B, C, and D, respectively. The graphical user interface 68 can be configured to display a polygonal line or curve as each reference point is selected on the image frame 74, along with labels showing each reference point selected, if desired. Selection of these reference points can be accomplished, for example, using a mouse, trackball, graphic tablet, or other suitable input device.

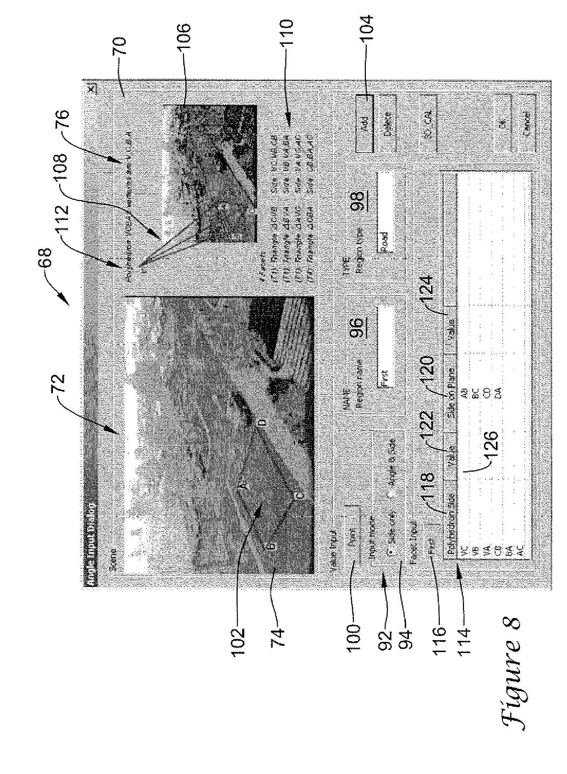

Once a polygonal zone 102 is defined on the image frame 74, the user may then assign a name and region type to the zone 102 using the REGION NAME and REGION TYPE text boxes 96,98. After entering the text of the region name and type within these text boxes 96,98, the user may then select an "Add" button 104, causing the graphical user interface 68 to display a still image 106 of the scene in the CAMERA POSITION section 76 along with a polyhedron 108 formed by drawing lines between the camera origin "V" and at least four selected reference points of the polygonal zone 102, as shown in a third view in Figure 8. The graphical user interface 68 can be configured to display a list 110 of those triangles and/or sides forming each of the fours facets of the polyhedron 108. The triangles forming the four faces of the polyhedron 108 can be highlighted on the screen by blinking text, color, and/or other suitable technique, and can be labeled on the display screen 70 as "T1", "T2", "T3", and "T4". If desired, a message 112 describing the vertices of the polyhedron 108 can also be displayed adjacent the still image 106.

A FACET INPUT section 114 of the graphical user interface 68 can be configured to receive values for the various sides of the polyhedron 108, which can later be used to form a 3D look-up table that correlates pixel coordinates in the image frame 74 with physical features in the image sensor's field of view. The FACET INPUT section 114 can be configured to display the various sides and/or angles forming the polyhedron 108 in tabular form, and can include an icon tab 116 indicating the name (*i*.*e*. "First") of the current ROI that is selected. With the INPUT MODE selection box 92 set to "Side only" mode, as shown in Figure 8, the FACET INPUT section 94 may include a number of columns 118, 120 that display the sides forming the polyhedron and the polyhedron base (*i*.*e*. the sides of the polygonal zone 102) as well as input columns 122, 124 configured to receive input values for these sides. As the user selects the boxes in each of the input columns 122,124, the graphical user interface 68 can be configured to highlight the particular polyhedron side or side on plane corresponding to that selection. If, for example, the user selects box 126 to enter a value for polyhedron side "VC" in the input column 122, then the graphical user interface 68 can be configured to highlight the corresponding line "VC" on the polyhedron 108 located in the CAMERA POSITION section 76.

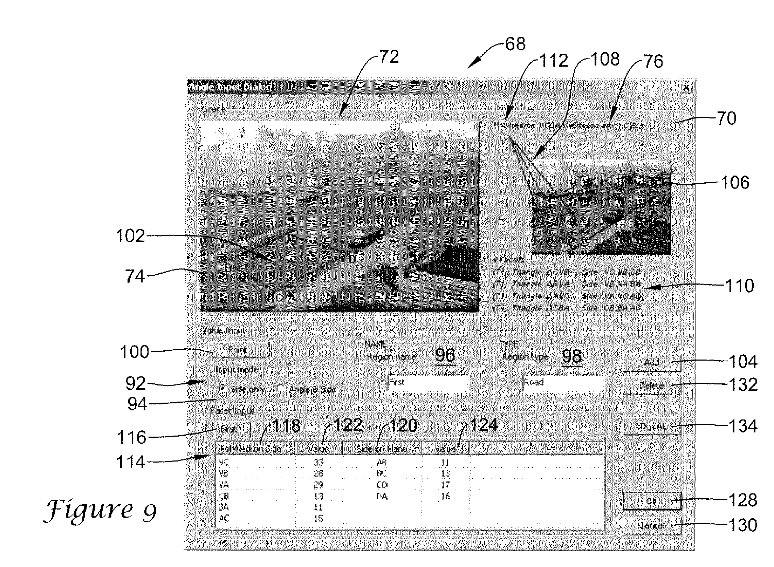

Figure 9 is another pictorial view showing an illustrative step of inputting a number of values into the input columns 122,124. As shown in Figure 9, a number of distance values relating to the distance between the image sensor vertex "V" and each reference point "A", "B", "C", "D" of the polyhedron 108 can be inputted into column 122. In similar fashion, a number of distance values relating to the distance between each reference point "A", "B", "C", "D" can be inputted into input column 124. A method similar to that described above with respect to block 44 in Figure 2, wherein the distance from the image sensor vertex "V" and two reference points as well as the distance between the two reference points can be used to calculate the coordinates of those reference points relative to the image sensor. Once a minimum number of values have been entered, an "OK" button 128 may be selected by the user to fill in the remaining distance and/or angle values in the input columns 122,124. Alternatively, a "Cancel" button 130 can be selected if the user wishes to discard the current entries from the input columns 122,124. A "Delete" button 132 can be selected by the user to delete one or more entries within the input columns 122,124, or to delete an entire ROI.

Alternatively, and in other embodiments, the user may select the "Angle & Side" button on the INPUT MODE frame 92 to calculate the coordinates of each reference point using both angle and side measurements. In certain embodiments, and also as described above with respect to Figure 2, the user may enter the distance value between the vertex "V" and at least two reference points on the polyhedron 108 as well as the angle at the vertex "V" between those two reference points to calculate the coordinates of those reference points relative to the image sensor.

Once the values for each region of interest is entered via the FACET INPUT section 94, the user may then select a "3D_CAL" button 134, causing the surveillance system to create a 3D dense range map containing the feature vectors for that region of interest. In certain embodiments, for example, selection of the "3D_CAL" button 1 34 may cause the surveillance system to create a 3D look-up table similar to that described above with respect to Figure 5, including X, Y, Z and t parameters representing the coordinates of the geo-location, a region name parameter identifying the name of the ROI containing the coordinates, and a region type parameter describing the type of ROI defined.

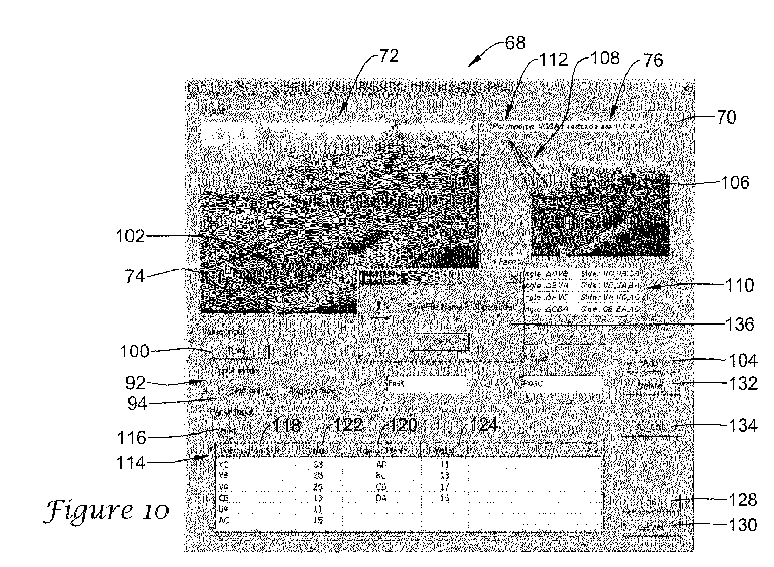

Once the 2D image domain data has been transformed into a 3D look-up table, the graphical user interface 68 can then output the table to a file for subsequent use by the surveillance system. The graphical user interface 68 can be configured to prompt the user whether to save a file containing the 3D look-up table data, as indicated by reference to window 136 in Figure 10. In certain embodiments, for example, the parameters in the 3D look-up table can be stored using a text file such as a ".txt" file, which can be subsequently retrieved and viewed using a text file reader tool. Such 3D look-up table data can be further provided to other components of the surveillance system for further processing, if desired.

Having thus described the several embodiments of the present invention, those of skill in the art will readily appreciate that other embodiments may be made and used which fall within the scope of the claims attached hereto. Numerous advantages of the invention covered by this document have been set forth in the foregoing description. It will be understood that this disclosure is, in many respects, only illustrative. Changes can be made with respect to various elements described herein without exceeding the scope of the invention.

## Claims

1. A method (26) of transforming two-dimensional image domain data into a 3D dense range map, the method **characterized by** the steps of:
acquiring (28) an image frame (56,74) from an image sensor (12,14,16,40);
selecting (30) at least one region of interest within the image frame (56,74);
determining the geo-location of three or more reference points (R₁,R₂,R₃,R₄) within each selected region of interest; and
transforming (50) 2D image domain data (54) from each selected region of interest into a 3D dense range map (52) containing physical features of one or more objects (46) within the image frame (56,74).

2. The method of claim 1, wherein said image sensor (12,14,16,40) comprises a single video camera.

3. The method of claim 1, wherein said step (30) of selecting at least one region of interest within the image frame (56,74) includes the step of manually segmenting the image frame (56,74) and defining a polygonal zone (36,102) therein using a graphical user interface (24,68).

4. The method of claim 3, wherein said step of determining the geo-location of three or more reference points (R₁,R₂,R₃,R₄) within each selected region of interest includes the steps of:
measuring the distance (D₂,D₄) from the image sensor (12,14,16,40) to a first and second reference point (R₂,R₄) defining the polygonal zone (36,102); and
measuring the distance (D_{2→4}) between said first and second reference points (R₂,R₄) .

5. The method of claim 3, wherein said step of determining the geo-location of three or more reference points (R₁,R₂,R₃,R₄) within each selected region of interest includes the steps of:
measuring the distance to first and second reference points (R₂,R₄) of a planar triangle (42) defined by the polygonal zone (36,102); and
measuring the included angle (θ) between the lines forming the two distances (D₂,D₄) between the image sensor (12,14,16,40) and the first and second reference points (R₂,R₄).

6. The method of claim 3, further **characterized by** the step (44) of determining the geo-location of one or more objects (46) within the polygonal zone (36,102).

7. The method of claim 1, further **characterized by** the steps of:
calculating (62) a feature vector including one or more physical features from each region of interest defined in the image frame (56,74); and
outputting (64) a response to a user and/or other algorithm.

8. The method of claim 1, further **characterized by** the steps of:
analyzing a number of successive image frames (56,74) from the image sensor (12,14,16,40); and
dynamically (66) updating the 3D dense range map (52) with physical features from each successive image frame (56,74).

9. A video surveillance system (10), **characterized by**:
an image sensor (12,14,16,40) adapted to acquire images containing at least one region of interest;
a graphical user interface (24,68) for displaying images acquired from the image sensor (12,14,16,40) within an image frame (56,74); and
processing means (20) for determining (44) the geo-location of one or more objects (46) within the image frame (56,74), said processing means (20) configured to run an algorithm or routine (22) adapted to transform (50) two-dimensional image data (54) received from the image sensor (12,14,16,40) into a 3D dense range map (52) containing physical features of one or more objects (46) within the image frame (56,74).

10. The video surveillance system of claim 9, wherein said algorithm or routine (22) is adapted to:
determine (44) the geo-location of one or more objects (46) within each selected region of interest;
calculate (62) a feature vector including one or more physical features from each object (46) within the image frame (56,74); and
output (64) a response to a user containing one or more parameters (60) of the feature vector.
